# EUROPEAN PATENT SPECIFICATION

(11) **EP 1 806 210 B1**
(45) Date of publication and mention of the grant of the patent: **11.09.2019**
(21) Application number: 06125153.4
(22) Date of filing: 30.11.2006
(51) Int. Cl.: B25J 5/00, B62D 61/12

(54) **Travelling robot**
Fahrender Roboter
Robot voyageur

(30) Priority: 02.12.2005 KR 20050117170
(43) Date of publication of application: 11.07.2007
(73) Proprietor: Samsung Electronics Co., Ltd., Gyeonggi-do 16677 (KR)
(72) Inventor: Lee, Youn-baek, Suwon-si Gyeonggi-do (KR); Yang, Soo-sang, Suwon-si Gyeonggi-do (KR); Oh, Yeon-taek, Yongin-si Gyeonggi-do (KR)
(74) Representative: Grey, Ian Michael

(56) References cited:
- JP-A- 3 186 468
- US-A1- 2005 225 040

## Description

The present invention relates to a transportation mechanism for a mobile robot, comprising a main body and at least one front wheel.

Robots are commonly used to perform dangerous, repetitive, precise, large-scale or high-volume work in place of a human being in fields such as industry, military and in the home. Such robots are often required to move between different areas to perform predetermined operations, and so a travelling/transportation mechanism is necessary for such robots. Thus, research and developments in technology in travelling/transport mechanisms have been undertaken/made which allow a robot to travel smoothly while keeping its balance when travelling on an uneven surface, such as a travelling surface with steps.

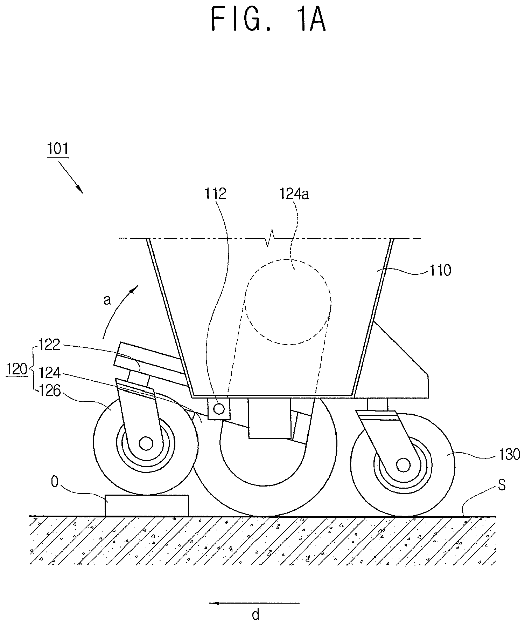

Figures 1A to 1C are schematic views illustrating travelling states of a known conventional travelling robot 101 having a housing 110, a rear wheel 130 and a driving part 120 to travel on a travel surface S. The housing 110 is provided with a function part (not illustrated) for performing a predetermined function. The rear wheel 130 is fixedly supported to a rear side of the housing 110 relative to a travelling direction 'd'. The rear wheel 130 rotates idly and serves to support the housing 110 on the surface S.

The driving part 120 has a frame 122, a driving wheel 124 and a front wheel 126. The frame 122 is rotatably coupled to the housing 110 by a hinge 112. A driving wheel 124 is disposed on the right and left sides of the frame 122 respectively. The driving wheel 124 receives driving power from a driving motor 124a and allows the housing 110 to travel in the travelling direction d. The front wheel 126 is supported at a front side of the housing 110, in front of the driving wheel 124 with respect to the travelling direction 'd' of the frame 122. The single front wheel 126 rotates idly to support the housing 110 on the travel surface S. The frame 122 is rotated on the housing 110 by the hinge 112, thus the driving wheel 124 and the front wheel 126 are integrally rotated together with the frame 122. A travelling robot 101 such as that described above is disclosed in US Patent No. 5350033.

However, when such a robot 101 is not always capable of smoothly negotiating an obstacle 0, such as a step, its travelling performance may be deteriorated. As illustrated in Figure 1A, as the travelling robot 101 mounts the obstacle 0, the front wheel 126 is first lifted onto the obstacle 0. As this happens, the frame 122 is rotated about the hinge 112 in direction 'a' so that the housing 112 maintains its balance.

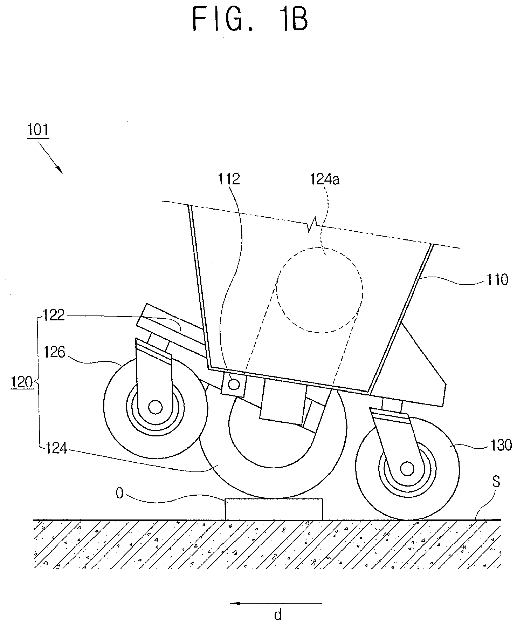

As illustrated in Figure 1B, when the travelling robot 101 further travels in the direction 'd', the driving wheel 124 then climbs up the obstacle 0, resulting in the centre of gravity of the travelling robot 101 shifting backward and being disposed over the rear wheel 130. This may result in the driving wheel 124 not receiving sufficient traction force to drive the robot 101 forward and the rotating driving wheel 124 slipping on the obstacle 0.

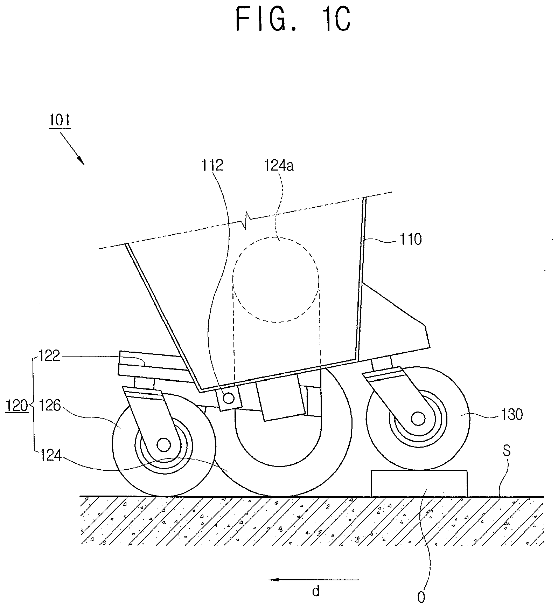

Referring to Figure 1C, if the travelling robot 101 is able to continue to travel in the travelling direction 'd', as the driving wheel 124 passes and drops down from the obstacle 0 and the rear wheel 130 is positioned onto the obstacle 0, the centre of gravity of the travelling robot 101 rapidly shifts forwards. This may cause the front wheel 126 to abruptly contact the travelling surface S, and cause the housing 112 to sway.

The above problems regarding the travelling performance of such known travelling robots 101 may become even worse when the height of the obstacles 0 to be negotiated by right and left driving wheels 124 respectively, are different from each other. That is, since the single front wheel 126 and a pair of driving wheels 124 are supported by and integrally linked with the frame 122, the travelling robot 101 may not be capable of dealing with the height difference between the obstacles 0 and thus the slipping of the driving wheel 124 and the swaying of the housing 110 may be further exaggerated.

The robot disclosed in patent JP 3,186,468 attempts to overcome these problems by employing a connecting lever between the front wheel and the drive wheel, said connecting lever pivoting about a point intermediate it's ends, such that as the front wheel climbs a step, the driving wheel is forced downwards and so increases the grip level as well as changing the angle of the robot to better enable the robot to climb the step. This method uses a fixed lever between the front wheel and the drive wheel. This will create unsatisfactory performance in some operating circumstances and again cause loss of grip between the drive wheel and the surface. This is caused by the unyielding link between the front wheel and the drive wheel, limiting the independent travel between the front wheel and the drive wheel.

It is therefore an object of the present invention to provide a travelling robot and travelling mechanism for such a robot, which substantially alleviates or overcomes the problems mentioned above.

It is known from JP 3,186,468 A to provide a transportation mechanism for a mobile robot, comprising a main body, at least one primary wheel and at least one wheel assembly moveably mounted to the main body. The wheel assembly comprising a frame having a secondary wheel mounted to one end of the frame. The transportation mechanism also comprises at least one drive wheel assembly, between the primary wheel and the wheel assembly, each drive wheel assembly comprising a drive wheel and a drive frame. The drive frame being pivotally mounted to the main body for rotation about an axis. The wheel assembly and the drive wheel assembly are coupled by a linkage member such that movement of the wheel assembly can cause movement of the drive wheel assembly and vice versa.

According to the present invention, there is provided a transportation mechanism characterised in that the primary wheel is a front wheel and said wheel assembly is a rear wheel assembly, and in that a first end of the linkage member is secured to the drive frame and an opposite end of the linkage member is detached from, but disposed proximate to, an end portion of the rear frame such that the linkage member pushes against the rear frame, or the rear frame pushes against the linkage member, depending on the direction of rotation of the drive frame about said axis and movement of the rear wheel relative to the body frame respectively, said opposite end of the linkage member also being separable from the rear frame, depending on the position of the drive frame, such that the driving wheel and rear wheel can move independently relative to the body frame.

Preferably, the linkage member is secured proximate to a first end of the drive frame and the drive wheel is mounted proximate to an opposite end of the drive frame, the drive frame being pivotally mounted to the main body intermediate its ends.

Preferably, the rear assembly is slidably mounted to the main body to, in use, slide in a substantially vertical plane.

In one embodiment, the end of the rear frame remote from the rear wheel includes a cam and said opposite end of the linkage member comprises a cam follower.

The rear wheel assembly may include a biasing means to, in use, bias the rear wheel upwardly towards an underside of the main body.

The drive assembly may also include a biasing means to, in use, bias the drive wheel downwardly from an underside of the main body.

In an exemplary embodiment, the axis, about which the drive frame can rotate, is formed by a hinge, positioned between the driving wheel and the rear wheel.

Preferably, the hinge is positioned within a predetermined distance from the centre of gravity of the travelling robot.

In a preferred embodiment, each of the rear wheel, the rear frame, the driving wheel, the driving frame and the linkage member is disposed in pairs, each one of the pair being disposed on opposite sides of the body frame to be operated independently with respect to the other.

In a preferred embodiment, the transportation mechanism further comprises a guide provided between the body frame and the rear frame and extends in a direction perpendicular to the axis of the driving wheel to guide the rear frame, to allow the rear frame to move vertically relative to the plane of the body frame.

The rear frame may comprise a sliding part to be in sliding contact with the linkage member.

The transportation mechanism may further comprise at least one stopper, mounted to the main body, to limit the substantially vertical movement of the rear wheel assembly and the driving wheel assembly.

Preferably, the stopper includes a guide recess extending through the frame body, and the rear frame body comprises a guide projection which extends along a length thereof along the guide recess, and a rear pressing member which extends along an outer portion of the rear frame body between the stopper and the sliding part of the rear frame body to bias the rear frame body in an upward direction such that the rear pressing member provides a reaction force to a force provided by the linkage member when the linkage member contacts the sliding part to move the rear wheel.

The drive pressing member may comprise a first end supported by the body frame, a second end supported by the drive frame and an elastic member which biases the one end away from the second end.

Preferably, the at least one stopper comprises a first stopper disposed at one side of the rear portion of the frame body and a second stopper disposed at another side of the rear portion of the frame body, and the at least one drive assembly comprises first and second drive assemblies to correspond with the first and second stoppers, respectively.

Preferred embodiments of the present invention will now be described, by way of example only, with reference to the accompanying drawings, in which:
Figures 1A to 1C are schematic views illustrating travelling stages of a conventional travelling robot;
Figure 2 is a perspective view of a travelling robot according to an embodiment of the present invention;
Figure 3 is a side view of the travelling robot in Figure 2;
Figure 4 is a perspective view of a main part of the travelling robot in Figure 2;
Figures 5A to 5C are side views illustrating the travelling stages of the travelling robot in Figure 2; and
Figures 6A and 6B are views illustrating other travelling stages of the travelling robot in Figure 2.

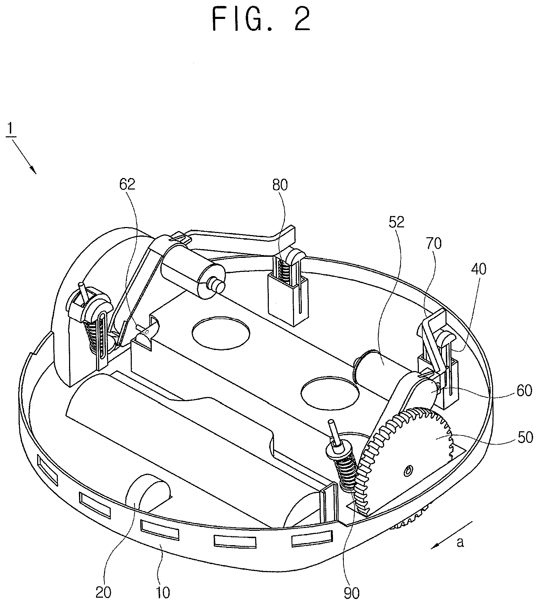

Referring to Figures 2 to 4, a travelling robot 1 comprises a body frame 10, a front wheel 20, a rear wheel 30, a rear frame 40, a driving wheel 50, a driving frame 60 and a linkage member 70. The body frame 10 is provided with a function performing part (not illustrated) to perform predetermined functions. The travelling robot 1 may be a cleaning robot in which the body frame 10 is equipped with a cleaning part (not illustrated) to clean a travelling surface, a display robot having the body frame 10 which is equipped with a display part (not illustrated) to display information, or a robot to perform any other function.

The front wheel 20 is supported on a front side of the body frame 10 with respect to a travelling direction 'd' of the robot in use and supports the body frame 10 on the surface being travelled. Though the front wheel 20 is illustrated in Figure 2 as being a single front wheel 20, alternatively a plurality of front wheels 20 may be disposed to be arranged in a direction perpendicular to the travelling direction "d." The front wheel 20 may also have a steering function. Further, although the front wheel 20 is illustrated to be supported by the body frame 10 to be rotated idly, it may alternatively be driven by a driving motor.

The rear wheel 30 is disposed on the rear side of the body frame 10 on the opposite side thereof to the front wheel 20. The rear wheel 30 is supported by the rear frame 40 and rotates idly. In an alternative embodiment however, the rear wheel 30 may be driven by a driving motor.

The rear frame 40 supports the rear wheel 30, and is supported by the body frame 10 so as to slide vertically relative to the body frame 10 (or with respect to the direction in which the robot travels). As the rear frame 40 slides vertically relative to the body frame 10, the rear wheel 30 also slides vertically relative to the body frame 10. The rear frame 40 has a first stopper 46 to prevent the rear frame 40 from sliding downwardly beyond a predetermined position, so as not to become separated from the body frame 10. Also, the rear frame 40 may have a second stopper (not illustrated) to prevent the rear wheel 30 from sliding upwardly beyond a contact position where the rear wheel 30 projects from the body frame 10 to be in contact with the surface being travelled across. According to another embodiment of the present invention, the rear frame 40 may further include a rear biasing member 80 to bias the rear frame 40 upward by an elastic force.

The driving wheel 50 is disposed between the front wheel 20 and the rear wheel 30 and is operable to cause the travelling robot 1 to travel forwards in the travelling direction 'd'. However, the driving wheel 50 may also cause the travelling robot 1 to travel backwards in an opposite direction of the travelling direction 'd'. The driving wheel 50 receives a driving force from a driving motor 52 and power transmitting unit (not illustrated) is disposed between the driving wheel 50 and the driving motor 52 to transmit the driving force.

The driving frame 60 supports the driving wheel 50 and is coupled to the body frame 10 by a hinge 62 extending in a parallel direction to an axis of the driving wheel 50. As the driving frame 60 is rotated about the hinge 62 relative to the body frame 10, the driving wheel 50 is also rotated around the hinge 62 so as to move vertically relative to the body frame 10.

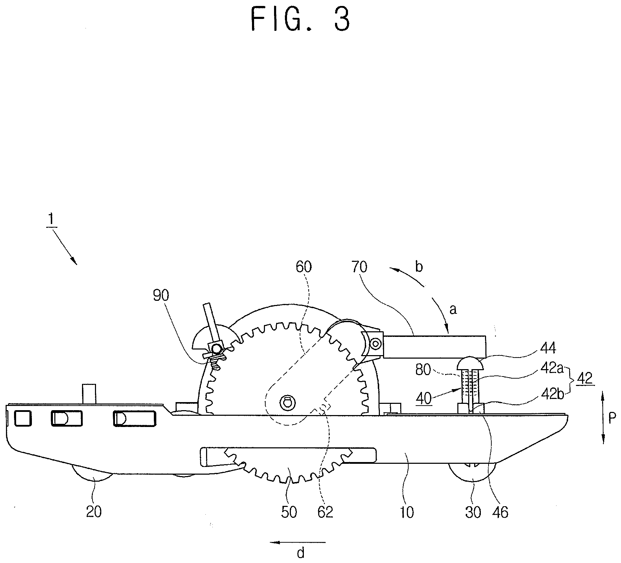

The hinge 62 is disposed between the driving wheel 50 and the rear wheel 30 and connects the driving frame 60 with the body frame 10. (See Figure 3). If the weight of the travelling robot 1 is applied directly downwards to the hinge 62 when the travelling robot 1 is positioned horizontally on the surface being travelled across, the driving frame 60 is biased to rotate in a direction 'a' to force the linkage member 70 to press downwards on the rear frame 40. Therefore, when the travelling robot travels, the linkage member 70 contacts the rear frame 40, so that the rotation of the driving frame 60 vertically biases the rear frame 40 to slide downwards relative to the body frame 10.

The linkage member 70 is connected to the driving frame 60 to be contacted with or separated from the rear frame 40 as the driving frame 60 is rotated relative to the body frame 10. The linkage member 70 is joined to the driving frame 60 to integrally move with the driving frame 60, so that the linkage member 70 is rotated about the hinge 62 when the driving frame 60 is rotated about the hinge 62. However, the linkage member 70 can be in contact with or spaced from the rear frame 40, according to the rotating position of the driving frame 60.

When the linkage member 70 is in contact with the rear frame 40, the linkage member 70 presses the rear frame 40 to slide downwardly relative to the body frame 10. Therefore, the linkage member 70 links the rotation of the driving frame 60 with the vertical sliding of the rear frame 40 so that the driving wheel 50 and the rear wheel 30 are linked to each other to move vertically relative to the plane of the body frame 10. If the driving wheel 50 moves upwardly relative to the body frame 10, the driving frame 60 is rotated about the hinge 62 in the direction "a" and the linkage member 70 contacts the rear frame 40, thereby pressing the rear frame 40 downwards to lower the position of the rear wheel 30 relative to the body frame 10. In contrast, if the rear wheel 30 moves upwardly relative to the body frame 10, the rear frame 40 presses the linkage member 70 to rotate the driving frame 60 about hinge 62 in a direction "b," thereby lowering the position of the driving wheel 50 relative to the body frame 10. When the linkage member 70 is separated from the rear frame 40, the rear frame 40 slides vertically relative to the body frame 10 without the restriction caused by the rotation of the driving frame 60. In this case, the driving wheel 50 and the rear wheel 30 can independently move relative to the body frame 10.

Although the linkage member 70 is joined to the driving frame 60 to integrally move with the driving frame 60, according to another embodiment of the present invention, the linkage member 70 may be connected to the driving frame 60 so as to be disposed to be contacted to or separated from the rear frame 40 according to the rotating position of the driving frame 60.

The hinge 62 can be positioned within a predetermined distance from the centre of gravity of the travelling robot 1. That is, the hinge 62 which joins the driving frame 60 with the body frame 10 can be positioned at the centre of gravity or in an area adjacent to the centre of gravity. Therefore, when the driving frame 60 is rotated relative to the body frame 10 as a result of the travelling robot 1 travelling on an uneven surface, the shift of the centre of gravity of the travelling robot 1 can be minimized, thereby maintaining a traction force of the driving wheel 50 with respect to the surface being travelled on, thus preventing swaying of the body frame 10 and improving the travelling performance of the travelling robot 1.

The rear wheel 30, the rear frame 40, the driving wheel 50, the driving frame 60 and the linkage member 70 may be provided in pairs disposed on either side of the body frame 10 to operate independently on each side. In this case, the pair of driving wheels 50 are driven by respective driving motors 52 which are driven independently of each other. The pair of rear wheels 30, the pair of rear frames 40, the pair of frames 60 and the pair of linkage members 70 also operate and are driven independently of each other. Therefore, when travelling on a surface which is uneven with respect to each side of the robot, each respective driving wheel 50 can adapt to the respective surface independently of the other.

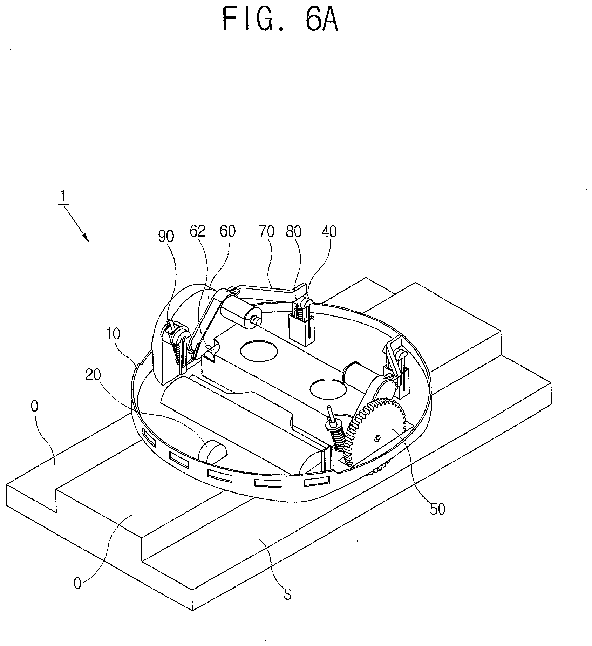

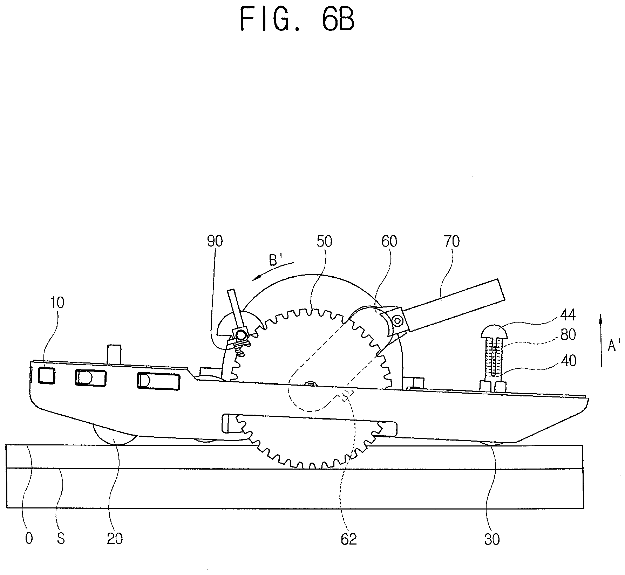

The pair of rear wheels 30 are positioned between the pair of driving wheels 50 with respect to the front-rear-centre line of the robot, in other words, the distance between the pair of rear wheels 30 is smaller than the distance between the pair of driving wheels 50. Accordingly, when the travelling robot 1 travels on a travelling surface which is formed with a step having a width narrower than the distance between the pair of driving wheels 50, the pair of rear wheels 30 contact the step to support the body frame 10 (see Figures 6A and 6B). In an alternative embodiment of the present invention however, the rear wheels 30 may be disposed in a line with the driving wheels 50 and further alternatively, the rear wheels 30 may be disposed such that the distance between the rear wheels 30 is larger than the distance between the driving wheels 50. Also, in yet another embodiment of the present invention, three or more groups of the rear wheel 30, the rear frame 40, the driving wheel 50, the driving frame 60, and the linkage member 70 may be disposed on the body frame 10.

The travelling robot 1 has a guide 42 (see Figure 3) which is provided between the body frame 10 and the rear frame 40 and extends in a direction p perpendicular to the axis of the driving wheels 50 to guide the rear frame 40 so that the rear frame 40 slides in the direction p, which is also perpendicular to the plane of the body frame 10. The guide 42 has a guide projection 42a which extends in the direction p on the rear frame 40 and a guide recess 42b which is formed on the body frame 10 to guide the guide projection 42a. As the guide projection 42a slides along the guide recess 42b, the rear frame 40 slides in the direction p relative to the body frame 10. According to another embodiment of the present invention, the guide projection 42a may be formed on the body frame 10 and the guide recess 42b may be formed on the rear frame 40.

The rear frame 40 being supported to slide vertically relative to the body frame 10 is achieved by a simple structure, and so the travelling robot 1 can be easily and cheaply manufactured. In an alternative embodiment of the present invention, the rear frame 40 may be supported to slide not in the direction p, but in a decline direction, in a circumferential direction around the hinge 62 or in any other curved direction relative to the body frame 10.

The rear frame 40 has a sliding part 44 which slidably contacts the linkage member 70. The linkage member 70 extends from the driving frame 60 to contact an end of the rear frame 40, and the sliding part 44 has a curved sliding surface 45 which is formed on the end of the rear frame 40. Alternatively however, the present invention may include the linkage member 70 extending to contact any other portion except for the end of the rear frame 40 and the sliding part 44 may be disposed on a part which is contacted by the linkage member 70.

The sliding part 44 allows the linkage member 70 to smoothly slide relative to the rear frame 40, so that the rear frame 40 and the driving frame 60 can easily move vertically and be rotated respectively without being restricted by the movement between each other when the rear frame 40 and the driving frame 60 move in different directions. The sliding part 44 allows the rear frame 40 to slide in the direction p irrespective of the rotating direction of the driving frame 60. According to another embodiment of the present invention, the sliding part 44 may be omitted, and the linkage member 70 may be directly contacted with a surface of the rear frame 40.

The travelling robot 1 has a rear biasing member 80 which is provided between the body frame 10 and the rear frame 40 to bias the rear frame 40 upwardly relative to the body frame 10. The rear biasing member 80 has one end which is supported by the body frame 10 and another end which is supported by the rear frame 40 to lift the rear frame 40 relative to the body frame 10 by an elastic force. Thus, when an external force is not applied to the rear frame 40, the rear frame 40 is prevented from descending and projecting from the underside of the body frame 10. The rear biasing member 80 may be a coil spring, a plate spring or any other spring.

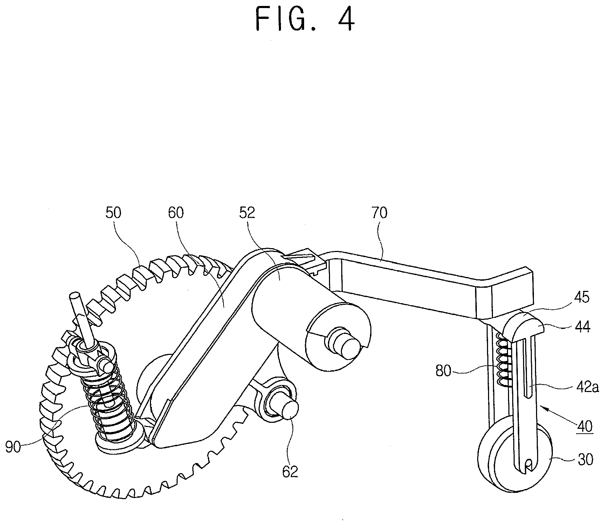

The travelling robot 1 has a drive biasing member 90 (see, for example, Figures 3 and 4) which is provided between the body frame 10 and the driving frame 60 to rotatably bias the driving frame 60 and thereby lower the driving wheel 50 relative to the body frame 10. The drive biasing member 90 has one end which is supported by the body frame 10 and another end which is supported by the driving frame 60 at an opposite side of the driving frame 60 from which the hinge 62 is disposed. Thus, the axis of the driving wheel 50 is interposed between the point at which the drive biasing member 90 is supported by the driving frame 60 and the hinge 62. The drive biasing member 90 rotatably biases the driving frame 60 in a direction 'b' to lower the driving wheel 50 relative to the body frame 10, and thereby increases a traction force of the driving wheel 50 against the surface being travelled on and prevents the driving wheel 50 from sliding on the that surface.

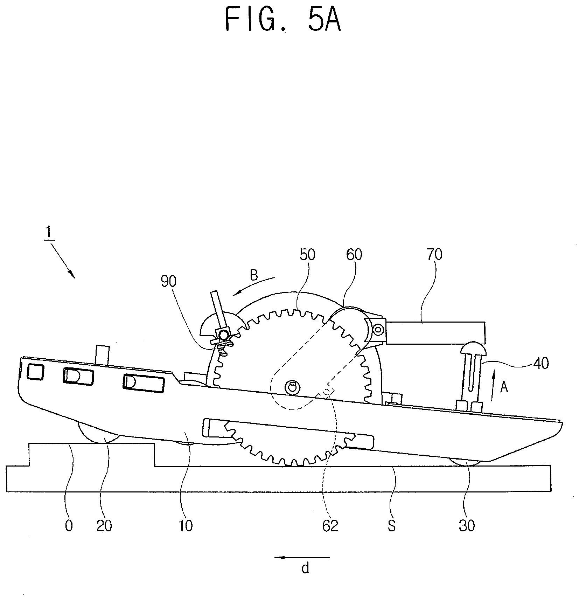

Hereinafter, an operation of the travelling robot according to an embodiment of the present invention will be described with reference to Figures 5A to 6B.

Referring to Figures 5A to 5C, the travelling robot 1, is shown travelling on an uneven surface which has a stepped part along the driving direction 'd'. Referring to Figure 5A, as the front wheel 20 climbs up the stepped surface 0, the weight of the travelling robot 1 is concentrated on the rear wheel 30, so that the rear frame 40 slides upwardly relative to the body frame 10 (see arrow "A"). As this happens, the rear frame 40 presses the linkage member 70 and the linkage member 70 rotates the driving frame 60 around the hinge 62 to lower the driving wheel 50 relative to the body frame 10 (see arrow "B"). Therefore, the driving wheel 50 can maintain enough traction force against the surface S being travelled on to drive the travelling robot 1 without difficulty.

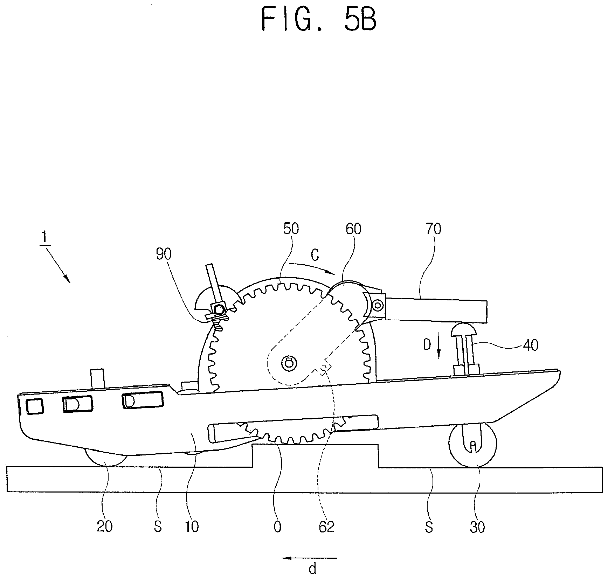

Referring to Figure 5B, when the travelling robot 1 further travels and then the driving wheel 50 climbs up the stepped surface 0, the weight of the travelling robot 1 is concentrated on the driving wheel 50, so that the driving wheel 50 moves upwardly relative to the body frame 10, and the driving frame 60 is rotated around the hinge 62 so that the linkage member 70 can press the rear frame 40 (see arrow "C"). The linkage member 70 lowers the rear frame 40 relative to the body frame 10 (see arrow "D"), so that the rear wheel 30 contacts the surface S being travelled on which is lower than the stepped surface 0. Therefore, the driving wheel 50 can maintain enough traction force and the rear wheel 30 is supported on the surface S, thereby preventing the body frame 10 from coming into contact with the surface S being travelled on.

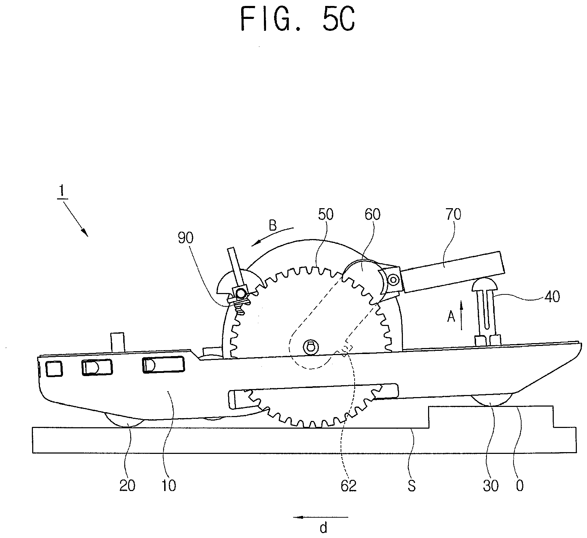

Referring now to Figure 5C, as the travelling robot 1 continues to travel, the driving wheel 50 descends from the step to reach the surface S and then the rear wheel 30 is positioned on the step 0. At this moment, the weight of the travelling robot 1 is then concentrated on the rear wheel 30. The rear wheel 30 then moves upwardly relative to the body frame 10 (see arrow "A") and the linkage member 70 is pressed by the rear frame 40, causing the driving frame 60 to be rotated (see arrow "B") so that the driving wheel 50 moves downwardly relative to the body frame 10. Therefore, the driving wheel 50 contacts the travelling surface 0 which is lower than the stepped surface 0 to ensure the proper traction force to drive the travelling robot 1.

As described above, when the travelling robot 1 travels on the surface S which includes the stepped surface 0, as the position on which the weight of the travelling robot 1 is concentrated is changed, the linkage member 70 links the rotation of the driving frame 60 with the vertical sliding of the rear frame 40. As a result, it is ensured that the driving wheel 50 has enough traction force and the body frame 10 is prevented from contacting the stepped surface 0.

Referring now to Figures 6A to 6B, the travelling robot 1 is shown travelling on a surface S which is formed with a stepped surface 0 whose width is narrower than the distance between the driving wheels 50. While the driving wheels 50 contact the surface S, the rear wheels 30 contact the stepped surface 0. The weight of the travelling robot 1 is then concentrated on the rear wheels 30, so that the rear frame 40 slides upwardly relative to the body frame 10 (see arrow "A"'). Since the surface S which the driving wheels 50 are in contact with is lower than the stepped surface 0 which the rear wheels 30 are in contact with, the driving wheels 50 further move downwardly relative to the body frame 10 as compared to the situation shown in Figures 5A to 5C or that of the robot 1 travelling on any other ordinary surface. Therefore, the driving frame 60 is rotated to allow the linkage member 70 to be separated from the rear frame 40 (see arrow "B"').

The driving frame 60 and the rear frame 40 can move independently with respect to each other. Although the driving frame 60 can be rotated through a considerable rotating angle, the rear frame 40 may not slide upwardly more than a predetermined position and the rear frame 40 is not secured to the driving frame 60. Thus, the rear wheel 30 reaches a position where it projects by a minimum distance from the underside of the body frame 10, in order to prevent the body frame 10 from contacting the stepped surface 0.

Further, since the driving frame 60 and the rear frame 40 are not attached to each other, the driving frame 60 is not restricted by the limited position of the rear frame 40 and so may rotate around the hinge 62. Therefore, the driving wheel 50 may move downwardly relative to the body frame 10 enough to contact the travelling surface S, so that it can ensure enough traction force.

Although a few embodiments of the present invention have been shown and described, it will be appreciated by those skilled in the art that changes may be made to these embodiments without departing from the principles of the invention, the scope of which is defined in the appended claims hereafter.

## Claims

1. A transportation mechanism for a mobile robot, comprising:
a main body (10); and
at least one primary wheel, and
at least one wheel assembly moveably mounted to the main body (10) and comprising a frame having a secondary wheel mounted to one end of the frame, and
at least one drive wheel assembly between the primary wheel (20) and the wheel assembly, each drive wheel assembly comprising a drive wheel (50) and a drive frame (60), the drive frame being pivotally mounted to the main body (10) for rotation about an axis, and
the wheel assembly and the drive wheel assembly being coupled by a linkage member (70) such that movement of the wheel assembly can cause movement of the drive wheel assembly and vice versa;
**characterised in that;**
the primary wheel is a front wheel (20) and said wheel assembly is a rear wheel assembly, and **in that**
a first end of the linkage member (70) is secured to the drive frame (60) and an opposite end of the linkage member (70) is detached from, but disposed proximate to, an end portion of the rear frame (40) such that the linkage member (70) pushes against the rear frame (40), or the rear frame (40) pushes against the linkage member (70), depending on the direction of rotation of the drive frame (60) about said axis and movement of the rear wheel (30) relative to the body frame (10) respectively, said opposite end of the linkage member (70) also being separable from the rear frame (40), depending on the position of the drive frame (60), such that the driving wheel (50) and rear wheel (30) can move independently relative to the body frame (10).

2. A transportation mechanism for a mobile robot according to claim 1 wherein the linkage member (70) is secured proximate to a first end of the drive frame (60) and the drive wheel (50) is mounted proximate to an opposite end of the drive frame (60), the drive frame (60) being pivotally mounted to the main body (10) intermediate its ends.

3. A transportation mechanism for a mobile robot according to claim 1 wherein the rear assembly is slidably mounted to the main body (10) to, in use, slide in a substantially vertical plane.

4. A transportation mechanism for a mobile robot according to claim 2 or claim 3 wherein the end of the rear frame (40) remote from the rear wheel (30) includes a cam and said opposite end of the linkage member (70) comprises a cam follower.

5. A transportation mechanism for a mobile robot according to any of claims 1 - 4 wherein the rear wheel assembly includes a biasing means (80) to, in use, bias the rear wheel (30) upwardly towards an underside of the main body (10).

6. A transportation mechanism for a mobile robot according to any of claims 1 - 5 wherein the drive assembly includes a biasing means (90) to, in use, bias the drive wheel (50) downwardly from an underside of the main body (10).

7. A transportation mechanism for a mobile robot according to claim 1, wherein the axis, about which the drive frame (60) can rotate, is formed by a hinge (62), positioned between the driving wheel (50) and the rear wheel (30).

8. A transportation mechanism for a mobile robot according to any preceding claim 7, wherein the hinge (62) is positioned within a predetermined distance from the centre of gravity of the travelling robot.

9. A transportation mechanism for a mobile robotaccording to claim 1, wherein each of the rear wheel (30), the rear frame (40), the driving wheel (50), the driving frame (60) and the linkage member (70) is disposed in pairs, each one of the pair being disposed on opposite sides of the body frame (10) to be operated independently with respect to the other.

10. A transportation mechanism for a mobile robot according to claim 5, further comprising:
a guide (42a) provided between the body frame (10) and the rear frame (40) and extends in a direction perpendicular to the axis of the driving wheel (50) to guide the rear frame (40), to allow the rear frame (40) to move vertically relative to the plane of the body frame (10).

11. A transportation mechanism for a mobile robot according to any of claims 1 through 4, wherein the rear frame (40) comprises a sliding part (44, 45) to be in sliding contact with the linkage member (70).

12. A transportation mechanism for a mobile robot according to any preceding claim, further comprising
at least one stopper (46), mounted to the main body (10), to limit the substantially vertical movement of the rear wheel assembly and the driving wheel assembly.

13. A transportation mechanism for a mobile robot according to claim 12, wherein
the stopper (46) includes a guide recess extending through the frame body (10), and the rear frame body (40) comprises:
a guide projection (42a) which extends along a length thereof along the guide recess, and
a rear pressing member (80) which extends along an outer portion of the rear frame body (40) between the stopper (46) and the sliding part of the rear frame body (45) to bias the rear frame body (40) in an upward direction such that the rear pressing member (80) provides a reaction force to a force provided by the linkage member (70) when the linkage member (70) contacts the sliding part (45) to move the rear wheel (30).

14. A transportation mechanism for a mobile robot according to claim 13, wherein the drive pressing member (60) comprises a first end supported by the body frame (10), a second end supported by the drive frame (60) and an elastic member which biases the one end away from the second end.

15. A transportation mechanism for a mobile robot as claimed in any one of claims 12 through 14, wherein
the at least one stopper (46) comprises a first stopper disposed at one side of the rear portion of the frame body (10) and a second stopper disposed at another side of the rear portion of the frame body (10), and
the at least one drive assembly comprises first and second drive assemblies to correspond with the first and second stoppers (46), respectively.

## Patentansprüche

1. Transportmechanismus für einen mobilen Roboter, der Folgendes beinhaltet:
einen Hauptkörper (10); und
mindestens ein Primärrad und
mindestens eine Radbaugruppe, die an dem Hauptkörper (10) bewegbar befestigt ist und einen Rahmen beinhaltet, der ein Sekundärrad aufweist, das an einem Ende des Rahmens befestigt ist, und
mindestens eine Antriebsradbaugruppe zwischen dem Primärrad (20) und der Radbaugruppe, wobei jede Antriebsradbaugruppe ein Antriebsrad (50) und einen Antriebsrahmen (60) beinhaltet, wobei der Antriebsrahmen an dem Hauptkörper (10) zur Rotation um eine Achse drehbar befestigt ist, und
wobei die Radbaugruppe und die Antriebsradbaugruppe durch ein Verknüpfungselement (70) gekoppelt sind, sodass eine Bewegung der Radbaugruppe eine Bewegung der Antriebsradbaugruppe und umgekehrt bewirken kann;
**dadurch gekennzeichnet, dass**
das Primärrad ein Vorderrad (20) ist und die Radbaugruppe eine Hinterradbaugruppe ist, und dadurch dass
ein erstes Ende des Verknüpfungselements (70) an dem Antriebsrahmen (60) gesichert ist und ein entgegengesetztes Ende des Verknüpfungselements (70) von einem Endabschnitt des Hinterrahmens (40) gelöst, aber in dessen Nähe angeordnet ist, sodass das Verknüpfungselement (70) gegen den Hinterrahmen (40) drückt oder der Hinterrahmen (40) gegen das Verknüpfungselement (70) drückt, abhängig von der Rotationsrichtung des Antriebsrahmens (60) um die Achse bzw. der Bewegung des Hinterrads (30) relativ zu dem Körperrahmen (10), wobei das entgegengesetzte Ende des Verknüpfungselements (70) auch von dem Hinterrahmen (40) getrennt werden kann, abhängig von der Position des Antriebsrahmens (60), sodass sich das Antriebsrad (50) und das Hinterrad (30) relativ zu dem Körperrahmen (10) unabhängig bewegen können.

2. Transportmechanismus für einen mobilen Roboter gemäß Anspruch 1, wobei das Verknüpfungselement (70) in der Nähe eines ersten Endes des Antriebsrahmens (60) gesichert ist und das Antriebsrad (50) in der Nähe eines entgegengesetzten Endes des Antriebsrahmens (60) befestigt ist, wobei der Antriebsrahmen (60) an dem Hauptkörper (10) zwischen dessen Enden drehbar befestigt ist.

3. Transportmechanismus für einen mobilen Roboter gemäß Anspruch 1, wobei die Hinterbaugruppe an dem Hauptkörper (10) gleitend befestigt ist, um bei Verwendung in einer im Wesentlichen vertikalen Ebene zu gleiten.

4. Transportmechanismus für einen mobilen Roboter gemäß Anspruch 2 oder Anspruch 3, wobei das Ende des Hinterrahmens (40) abgesetzt von dem Hinterrad (30) eine Nocke umfasst und das entgegengesetzte Ende des Verknüpfungselements (70) einen Nockenstößel beinhaltet.

5. Transportmechanismus für einen mobilen Roboter gemäß einem der Ansprüche 1-4, wobei die Hinterradbaugruppe ein Vorspannmittel (80) umfasst, um bei Verwendung das Hinterrad (30) nach oben zu einer Unterseite des Hauptkörpers (10) vorzuspannen.

6. Transportmechanismus für einen mobilen Roboter gemäß einem der Ansprüche 1-5, wobei die Antriebsbaugruppe ein Vorspannmittel (90) umfasst, um bei Verwendung das Antriebsrad (50) nach unten von einer Unterseite des Hauptkörpers (10) vorzuspannen.

7. Transportmechanismus für einen mobilen Roboter gemäß Anspruch 1, wobei die Achse, um die der Antriebsrahmen (60) rotieren kann, durch ein Gelenk (62), das zwischen dem Antriebsrad (50) und dem Hinterrad (30) positioniert ist, gebildet wird.

8. Transportmechanismus für einen mobilen Roboter gemäß Anspruch 7, wobei das Gelenk (62) innerhalb eines vorher festgelegten Abstands von dem Schwerpunkt des fahrenden Roboters positioniert ist.

9. Transportmechanismus für einen mobilen Roboter gemäß Anspruch 1, wobei das Hinterrad (30), der Hinterrahmen (40), das Antriebsrad (50), der Antriebsrahmen (60) und das Verknüpfungselement (70) jeweils in Paaren angeordnet sind, wobei jedes der Paare auf entgegengesetzten Seiten des Körperrahmens (10) angeordnet ist, um unabhängig voneinander betrieben zu werden.

10. Transportmechanismus für einen mobilen Roboter gemäß Anspruch 5, der ferner Folgendes beinhaltet: eine Führung (42a), die zwischen dem Körperrahmen (10) und dem Hinterrahmen (40) bereitgestellt ist und sich in einer Richtung senkrecht zu der Achse des Antriebsrads (50) erstreckt, um den Hinterrahmen (40) zu führen, um zu ermöglichen, dass sich der Hinterrahmen (40) relativ zu der Ebene des Körperrahmens (10) vertikal bewegt.

11. Transportmechanismus für einen mobilen Roboter gemäß einem der Ansprüche 1 bis 4, wobei der Hinterrahmen (40) einen gleitenden Teil (44, 45) beinhaltet, um mit dem Verknüpfungselement (70) in gleitendem Kontakt zu sein.

12. Transportmechanismus für einen mobilen Roboter gemäß einem vorhergehenden Anspruch, der ferner Folgendes beinhaltet:
mindestens einen Anschlag (46), der auf dem Hauptkörper (10) befestigt ist, um die im Wesentlichen vertikale Bewegung der Hinterradbaugruppe und der Antriebsradbaugruppe zu begrenzen.

13. Transportmechanismus für einen mobilen Roboter gemäß Anspruch 12, wobei
der Anschlag (46) eine Führungsaussparung umfasst, die sich durch den Rahmenkörper (10) hindurch erstreckt, und
der Hinterrahmenkörper (40) Folgendes beinhaltet:
einen Führungsvorsprung (42a), der sich entlang einer Länge von diesem entlang der Führungsaussparung erstreckt, und
ein hinteres Druckelement (80), das sich entlang einem äußeren Abschnitt des Hinterrahmenkörpers (40) zwischen dem Anschlag (46) und dem gleitenden Teil des Hinterrahmenkörpers (45) erstreckt, um den Hinterrahmenkörper (40) in einer Aufwärtsrichtung vorzuspannen, sodass das hintere Druckelement (80) eine Reaktionskraft gegen eine durch das Verknüpfungselement (70) bereitgestellte Kraft bereitstellt, wenn das Verknüpfungselement (70) mit dem gleitenden Teil (45) in Kontakt ist, um das Hinterrad (30) zu bewegen.

14. Transportmechanismus für einen mobilen Roboter gemäß Anspruch 13, wobei das Antriebsdruckelement (60) ein erstes Ende, das von dem Körperrahmen (10) getragen wird, ein zweites Ende, das von dem Antriebsrahmen (60) getragen wird, und ein elastisches Element, das das eine Ende von dem zweiten Ende weg vorspannt, beinhaltet.

15. Transportmechanismus für einen mobilen Roboter gemäß einem der Ansprüche 12 bis 14, wobei
der mindestens eine Anschlag (46) einen ersten Anschlag, der an einer Seite des hinteren Abschnitts des Rahmenkörpers (10) angeordnet ist, und einen zweiten Anschlag, der an einer anderen Seite des hinteren Abschnitts des Rahmenkörpers (10) angeordnet ist, beinhaltet, und
die mindestens eine Antriebsbaugruppe eine erste und zweite Antriebsbaugruppe beinhaltet, um dem ersten bzw. zweiten Anschlag (46) zu entsprechen.

## Revendications

1. Mécanisme de transport pour un robot mobile, comprenant :
un corps principal (10) ; et
au moins une roue primaire, et
au moins un ensemble roue monté de manière mobile sur le corps principal (10) et comprenant un châssis ayant une roue secondaire montée sur une extrémité du châssis, et
au moins un ensemble roue d'entraînement entre la roue primaire (20) et l'ensemble roue, chaque ensemble roue d'entraînement comprenant une roue d'entraînement (50) et un châssis d'entraînement (60), le châssis d'entraînement étant monté de manière pivotante sur le corps principal (10) pour la rotation autour d'un axe, et
l'ensemble roue et l'ensemble roue d'entraînement étant accouplés par un élément de liaison (70) de telle façon que le mouvement de l'ensemble roue peut provoquer le mouvement de l'ensemble roue d'entraînement et vice versa ;
**caractérisé en ce que** ;
la roue primaire est une roue avant (20) et ledit ensemble roue est un ensemble roue arrière, et **en ce que**
une première extrémité de l'élément de liaison (70) est fixée au châssis d'entraînement (60) et une extrémité opposée de l'élément de liaison (70) est détachée de, mais disposée à proximité, d'une partie d'extrémité du châssis arrière (40) de telle façon que l'élément de liaison (70) pousse contre le châssis arrière (40) ou que le châssis arrière (40) pousse contre l'élément de liaison (70), en fonction du sens de rotation du châssis d'entraînement (60) autour dudit axe et du mouvement de la roue arrière (30) par rapport au corps de châssis (10), respectivement, ladite extrémité opposée de l'élément de liaison (70) pouvant également être séparée du châssis arrière (40), en fonction de la position du châssis d'entraînement (60), de telle façon que la roue d'entraînement (50) et la roue arrière (30) peuvent se déplacer indépendamment par rapport au corps de châssis (10).

2. Mécanisme de transport pour un robot mobile selon la revendication 1, dans lequel l'élément de liaison (70) est fixé à proximité d'une première extrémité du châssis d'entraînement (60) et la roue d'entraînement (50) est montée à proximité d'une extrémité opposée du châssis d'entraînement (60), le châssis d'entraînement (60) étant monté de manière pivotante sur le corps principal (10) entre ses extrémités.

3. Mécanisme de transport pour un robot mobile selon la revendication 1, dans lequel l'ensemble arrière est monté de manière coulissante sur le corps principal (10) afin de, à l'utilisation, coulisser dans un plan sensiblement vertical.

4. Mécanisme de transport pour un robot mobile selon la revendication 2 ou la revendication 3, dans lequel l'extrémité du châssis arrière (40) distante de la roue arrière (30) comporte une came et ladite extrémité opposée de l'élément de liaison (70) comprend un galet de came.

5. Mécanisme de transport pour un robot mobile selon l'une quelconque des revendications 1 à 4, dans lequel l'ensemble roue arrière comporte un moyen de sollicitation (80) pour, à l'utilisation, solliciter la roue arrière (30) vers le haut en direction d'une face inférieure du corps principal (10).

6. Mécanisme de transport pour un robot mobile selon l'une quelconque des revendications 1 à 5, dans lequel l'ensemble d'entraînement comporte un moyen de sollicitation (90) pour, à l'utilisation, solliciter la roue d'entraînement (50) vers le bas depuis une face inférieure du corps principal (10).

7. Mécanisme de transport pour un robot mobile selon la revendication 1, dans lequel l'axe autour duquel le châssis d'entraînement (60) peut tourner est formé par une charnière (62) positionnée entre la roue d'entraînement (50) et la roue arrière (30).

8. Mécanisme de transport pour un robot mobile selon la revendication 7, dans lequel la charnière (62) est positionnée à une distance prédéterminée du centre de gravité du robot voyageur.

9. Mécanisme de transport pour un robot mobile selon la revendication 1, dans lequel chaque élément parmi la roue arrière (30), le châssis arrière (40), la roue d'entraînement (50), le châssis d'entraînement (60) et l'élément de liaison (70) est disposé par paires, chacune des paires étant disposée sur des côtés opposés du corps de châssis (10) de façon à fonctionner indépendamment l'une de l'autre.

10. Mécanisme de transport pour un robot mobile selon la revendication 5, comprenant en outre :
un guide (42a) prévu entre le corps de châssis (10) et le châssis arrière (40) et s'étendant dans une direction perpendiculaire à l'axe de la roue d'entraînement (50) pour guider le châssis arrière (40) de façon à permettre au châssis arrière (40) de se déplacer verticalement par rapport au plan du corps de châssis (10).

11. Mécanisme de transport pour un robot mobile selon l'une quelconque des revendications 1 à 4, dans lequel le châssis arrière (40) comprend une partie coulissante (44, 45) pour être en contact coulissant avec l'élément de liaison (70).

12. Mécanisme de transport pour un robot mobile selon l'une quelconque des revendications précédentes, comprenant en outre
au moins une butée (46), montée sur le corps principal (10), pour limiter le mouvement sensiblement vertical de l'ensemble roue arrière et de l'ensemble roue d'entraînement.

13. Mécanisme de transport pour un robot mobile selon la revendication 12, dans lequel
la butée (46) comporte un creux de guidage qui s'étend à travers le corps de châssis (10), et
le corps de châssis arrière (40) comprend :
une saillie de guidage (42a) qui s'étend sur une longueur de celle-ci le long du creux de guidage, et
un élément de pression arrière (80) qui s'étend le long d'une portion extérieure du corps de châssis arrière (40) entre la butée (46) et la partie coulissante du corps de châssis arrière (45) afin de solliciter le corps de châssis arrière (40) dans une direction vers le haut de telle sorte que l'élément de pression arrière (80) fournit une force de réaction à une force fournie par l'élément de liaison (70) lorsque l'élément de liaison (70) entre en contact avec la partie coulissante (45) pour déplacer la roue arrière (30).

14. Mécanisme de transport pour un robot mobile selon la revendication 13, dans lequel l'élément de pression d'entraînement (60) comprend une première extrémité supportée par le corps de châssis (10), une deuxième extrémité supportée par le châssis d'entraînement (60) et un élément élastique qui sollicite l'une des extrémités en l'écartant de la deuxième extrémité.

15. Mécanisme de transport pour un robot mobile selon l'une quelconque des revendications 12 à 14, dans lequel
ladite au moins une butée (46) comprend une première butée disposée sur un côté de la portion arrière du corps de châssis (10) et une deuxième butée disposée sur un autre côté de la portion arrière du corps de châssis (10), et
ledit au moins un ensemble d'entraînement comprend des premier et deuxième ensembles d'entraînement pour correspondre aux première et deuxième butées (46), respectivement.
